Europäisches Patentamt

European Patent Office

Office européen des brevets

(11) Numéro de publication : **0 029 833
B1**

# FASCICULE DE BREVET EUROPÉEN

(45) Date de publication du fascicule du brevet :
25.07.84

(21) Numéro de dépôt : 80900983.0

(22) Date de dépôt : 04.06.80

(86) Numéro de dépôt international :
PCT/FR 80/00088

(87) Numéro de publication internationale :
WO/8002685 (11.12.80 Gazette 80/28)

(51) Int. Cl.³ : **C 04 B 13/22, C 04 B 17/01,
C 04 B 13/00, C 09 D 5/18,
C 09 K 3/28**

(54) **REVETEMENT POUR PROTEGER LES CONSTRUCTIONS, NOTAMMENT CONTRE LE FEU ET LA CHALEUR.**

(30) Priorité : 05.06.79 FR 7914285
14.03.80 FR 8005725

(43) Date de publication de la demande :
10.06.81 Bulletin 81/23

(45) Mention de la délivrance du brevet :
25.07.84 Bulletin 84/30

(84) Etats contractants désignés :
AT CH DE FR GB LI SE

(56) Documents cités :
CA-A- 681 577
FR-A- 1 069 996
FR-A- 1 462 297
FR-A- 2 003 288
FR-A- 2 249 051
FR-A- 2 315 489
US-A- 2 516 893
US-A- 2 684 913
US-A- 3 600 312
US-A- 3 885 980
Le dossier contient des informations techniques présentées postérieurement au dépôt de la demande et ne figurant pas dans le présent fascicule.

(73) Titulaire : DAUSSAN ET COMPAGNIE
29-33 Route de Rombas
F-57140 Woippy (FR)

(72) Inventeur : DAUSSAN, Jean-Charles
42 rue Saint-Marcel
F-57000 Metz (FR)
Inventeur : DAUSSAN, Gérard
9 Avenue Leclerc de Hautecloque
F-57000 Metz (FR)
Inventeur : DAUSSAN, André
52 rue des Pépinières
F-57050 Longeville-lès-Metz (FR)

(74) Mandataire : Bouju, André
Cabinet Bouju 38 avenue de la Grande Armée
F-75017 Paris (FR)

## Description

La présente invention concerne un revêtement pour protéger les constructions, notamment contre le feu et la chaleur.

Le mot revêtement est désigné ci-après sous son sens strict en excluant ainsi tous les matériaux massiques tels que briques et parpaings présentant une résistance suffisante pour réaliser le gros-œuvre de la construction.

Par « constructions », on désignera ci-après principalement les murs, plafonds, toitures, portes et charpentes des·immeubles d'habitation ou des locaux industriels ou agricoles, les garages, hangars, réalisés en poutrelles, poutres et poteaux métalliques, fermes pleines ou ajourées ou en treillis, les cloisons, les panneaux en matière plastique, matériaux expansés ainsi que des faux plafonds et leurs profilés de suspension, les boucliers pare-feu, les gaines d'aération, les conduits de fumée et d'incendie, les canalisations de transport, en particulier de produits pétroliers et matières inflammables analogues.

Par « constructions », on désignera également dans la description ci-après, les structures flottantes telles que les navires, ainsi que les réservoirs de stockage de produits inflammables, comme les produits pétroliers et chimiques, les carcasses de turbines hydrauliques ou atomiques, les réacteurs atomiques et analogues.

Pour protéger les constructions précitées contre les effets du feu et de la chaleur, on a déjà utilisé couramment des produits à base d'amiante, de fibres céramiques, de fibres de laine de roche ou de verre, éventuellement enrobées dans un liant inorganique ou organique.

Parmi les liants les plus utilisés pour enrober les fibres précitées, on citera notamment les ciments ordinaires du type « Portland », les ciments magnésiens, le plâtre, le monophosphate et le chlorophosphate d'aluminium et les liants phosphatiques.

Ces produits anti-feu ont des densités comprises entre 0,3 et 1,2. Les produits légers ayant une densité de l'ordre de 0,3 à 0,4 sont généralement à base de fibres minérales telles que la laine de roche, de basalte ou de scories de haut fourneau, additionnées de ciment ordinaire de type « Portland » à raison de 40 à 50 % de ciment et 50 à 70 % de fibres. La résistance en température de ces produits est assez médiocre, et leur pouvoir d'isolation thermique plutôt précaire. Leur durée de résistance au feu dépasse rarement une heure à une heure trente minutes, lorsqu'ils ne sont pas suffisamment tassés ou comprimés, pour augmenter leur densité jusqu'à 0,9 environ, avec une épaisseur de protection supérieure ou égale à 30 millimètres.

Les produits anti-feu ayant une densité supérieure comprise entre 0,9 et 1,2 environ, se présentent généralement sous forme de boue projetable, à base de plâtre ou de ciment ordinaire ou magnésien, additionnée de fibres et de particules réfractaires.

Ces produits anti-feu ont une meilleure tenue au feu et possèdent de plus un meilleur coefficient d'isolation thermique que les produits précités de densité plus faible.

Toutefois, aucun des produits anti-feu connus à base de ciment ne résiste à une température supérieure à 800-900 °C. En effet, ces produits perdent leur cohésion à ces températures du fait que le ciment se désagrège en devenant pulvérulent. Ainsi, le produit anti-feu se détache de la surface sur laquelle il était appliqué, de sorte que cette surface n'est alors plus protégée contre les effets du feu et de la chaleur.

Le brevet américain 3 885 980 décrit une composition résistant à la chaleur, composé de plâtre et de sulfate de magnésium heptahydraté. Cette composition présente les inconvénients propres au plâtre. De plus, le sulfate de magnésium hydraté est incompatible avec le ciment.

La demande de brevet français 2 315 489 décrit des produits granulaires qui contiennent un produit inorganique tel que du phosphate de sodium ainsi que de la perlite, de la vermiculite, du plâtre et autres. Ce document ne décrit pas un revêtement à base de ciment qui par définition doit accrocher à la surface à protéger. Dans ce document, les produits inorganiques sont utilisés pour les propriétés moussantes qu'il possèdent lorsqu'ils sont exposés au feu. Ces propriétés sont utiles lorsque le produit anti-feu est sous forme de granules, mais sont inacceptables dans le cas d'un revêtement destiné à rester adhérent à son support. En effet, le moussage entraînerait la désagrégation du ciment et sa séparation de support, de sorte que celui-ci ne serait plus protégé à l'égard du feu.

Le but de la présente invention est de fournir un revêtement pour protéger des constructions contre le feu et la chaleur présentant des propriétés nettement améliorées par rapport à celles des revêtements connus.

Suivant l'invention, le revêtement pour protéger des constructions contre le feu et la chaleur, comprenant des particules inorganiques réfractaires enrobées dans un liant hydraulique est caractérisé en ce qu'il comprend du ciment magnésien ou du ciment alumineux et/ou Portland et un phosphate alcalin ou alcalino-terreux capable de conférer au revêtement lors de la prise du ciment, en présence d'eau un nombre de molécules d'eau de cristallisation supérieur à celui obtenu avec le ciment seul, la proportion pondérale de ce phosphate alcalin ou alcalino-terreux étant comprise entre 1,5 et 20 %.

Les ciments ci-dessus forment lors de leur prise des molécules d'eau de cristallisation. Grâce à la présence dans le revêtement du phosphate alcalin ou alcalino-terreux, on augmente le nombre de molécules d'eau de cristallisation dans le revêtement durci.

L'expérience a montré ce résultat surprenant, qu'on pouvait ainsi augmenter considérablement la protection contre le feu obtenue par le revêtement.

On a constaté en effet qu'un tel revêtement, lorsqu'il était exposé à la chaleur ou au feu, montait beaucoup moins vite en température, que le revêtement connu, la vitesse moyenne de montée en température étant d'autant plus réduite que le nombre de molécules d'eau de cristallisation contenues dans ce revêtement était plus important.

Sans que l'invention soit liée à cette explication, la demanderesse pense que cette propriété résulte du fait que la libération de l'eau de cristallisation nécessite un apport de chaleur important qui a pour effet de maintenir la température du revêtement à une température basse comprise entre 100 et 200 °C tant que l'eau de cristallisation n'a pas été libérée.

Par ailleurs, la fissuration et la désagrégation du revêtement signalées précédemment sont dues précisément à la libération de l'eau de cristallisation formée lors de la prise du liant inorganique en présence d'eau.

De ce fait, l'homme du métier était dissuadé d'augmenter, comme le prévoit la présente invention, la quantité d'eau de cristallisation du revêtement, par crainte d'accélérer ou d'amplifier le processus de fissuration et de désagrégation du revêtement.

D'autres particularités et avantages de l'invention apparaîtront encore dans la description ci-après.

Lorsque le liant inorganique utilisé est un ciment magnésien, la composition pondérale du revêtement conforme à l'invention est de préférence la suivante :

| | |
|---|---|
| ciment magnésien (chlorure ou sulfate de magnésie additionné de magnésie) : | 20 à 80 % |
| perlite et/ou vermiculite et/ou fillite : | 10 à 0 % |
| borate de calcium : | 0 à 10 % |
| fibres synthétiques : | 60 à 0 % |
| matières carbonées (farine de bois) | 0 à 4 % |
| oxydes de fer : | 0 à 0,2 % |
| spath fluor : | 0 à 4 % |
| composé apportant de l'eau de cristallisation : phosphate alcalin ou alcalino-terreux : | 10 à 1,8 % |

On donne ci-après un exemple de composition de revêtement à base de ciment magnésien.

| | Exemple I |
|---|---|
| sulfate de magnésie : | 34 % |
| magnésie : | 37,5 % |
| perlite : | 0 % |
| fibres synthétiques : | 0 % |
| borate de calcium : | 10 % |
| farine de bois : | 4,5 % |
| spath fluor : | 4 % |
| phosphate alcalin ou alcalino-terreux : | 10 % |

Lorsqu'un tel revêtement est exposé à la chaleur ou au feu, il se comporte de la façon suivante :

La température de ce revêtement, mesurée au sein de ce dernier, au lieu de croître suivant une courbe continuellement croissante comme on pouvait l'attendre, reste constante pendant une durée atteignant généralement plusieurs heures à une température comprise entre 100 et 200 °C. Ce résultat confère au revêtement conforme à l'invention, des propriétés anti-feu et anti-chaleur extrêmement avantageuses.

Le palier de température précité ne peut nullement s'expliquer par l'isolation thermique apportée par les constituants du revêtement. Selon l'avis de la demanderesse, ce palier de température s'explique par la présence au sein du revêtement d'une quantité appréciable d'eau de cristallisation.

En effet, la libération de cette eau de cristallisation nécessite un apport calorifique correspondant à l'énergie de liaison des molécules d'eau et 540 kcal. par kg pour transformer cette eau libre en vapeur. De plus, l'eau libérée sous forme de vapeur humidifie l'atmosphère ce qui est favorable à l'extinction de l'incendie.

Le palier de température à laquelle s'effectue cette libération d'eau subsiste jusqu'à ce que toute l'eau de cristallisation a été vaporisée. La durée de ce palier est de ce fait proportionnelle à la proportion d'eau de cristallisation du revêtement.

Le processus de fissuration du revêtement dû à la désagrégation du liant inorganique commence avant que toute l'eau de cristallisation ait été libérée. A ce stade, le liant inorganique qui a perdu toutes ses propriétés physiques en tant que liant, n'est plus capable d'assurer la cohésion du revêtement. C'est alors qu'intervient le frittage des particules réfractaires qui assure une certaine cohésion du revêtement en évitant que ce dernier tombe en poussière.

Ce frittage débute grâce aux fondants (borate de calcium et spath fluor), à une température sensiblement comprise entre 850 °C et 900 °C.

3

Ainsi grâce à ce frittage, le revêtement conforme à l'invention assure la protection contre la chaleur et le feu jusqu'à des températures qui dépassent généralement 1 200 °C.

Le revêtement obtenu à partir de la composition selon l'exemple I est très dur et présente une très bonne adhérence sur tous les supports y compris le verre. Ce revêtement ne doit cependant pas être exposé aux intempéries. Lorsque ces revêtements sont exposés au feu, leur température reste constante à environ 100 °C pendant une durée comprise entre une demi-heure et six heures (suivant leur épaisseur) grâce à l'eau de cristallisation contenue dans ces revêtements. De plus, le frittage des particules inorganiques (perlite ou vermiculite) qui est réalisé grâce aux fondants (borate de calcium et spath fluor) permet au revêtement de rester cohérent jusqu'à des températures dépassant largement 1 000 °C.

Le revêtement selon l'exemple I est utilisé de préférence pour les couches de finition, appliquées sur des revêtements déjà existants, tels que des laines minérales ou d'amiante, en vue de renforcer leur tenue mécanique.

A partir d'un ciment magnésien, il est possible également d'obtenir un revêtement présentant un bon pouvoir d'isolation phonique, tout en ayant un pouvoir anti-feu appréciable, en modifiant la composition des constituants comme indiqué ci-après :

| | |
|---|---|
| chlorure ou sulfate de magnésie additionné de magnésie : | 26 à 60 % |
| perlite et/ou vermiculite en grains de diamètre compris entre 0 et 5 mm : | 15 à 38 % |
| borate de calcium et/ou carbonate de calcium : | 3 à 0 % |
| fibres synthétiques : | 28 à 0 % |
| farine de bois : | 4 à 0 % |
| spath fluor : | 4 à 0,5 % |
| phosphate alcalin ou alcalino-terreux : | 20 à 1,5 % |

Lorsque le liant inorganique utilisé est un ciment alumineux, du type Portland (ciment ordinaire, ou du ciment blanc NF 45 R), la composition pondérale du revêtement conforme à l'addition est de préférence la suivante :

| | |
|---|---|
| ciment alumineux et/ou Portland : | 30 à 62 % |
| particules inorganiques (par exemple perlite et/ou vermiculite) : | 25 à 10 % |
| matières carbonées : | 0 à 2 % |
| ralentisseurs ou accélérateurs de prise des ciments : | 0 à 2 % |
| fondants : | 0 à 3,5 % |
| fibres minérales et/ou organiques : | 40 à 0,5 % |
| composés apportant ou formant de l'eau de cristallisation : | |
| phosphate alcalin ou alcalino-terreux : | |

On donne ci-après quelques exemples de compositions de revêtements à base de ciment alumineux ou Portland :

| | Exemple II |
|---|---|
| ciment Portland : | 29 % |
| ciment alumineux : | 16 % |
| spath fluor : | 5 % |
| silice : | 20 % |
| alumine hydratée : | 20 % |
| phosphate alcalin ou alcalino-terreux : | 10 % |

| | Exemple III | Exemple IV |
|---|---|---|
| Ciment alumineux | 62 % | 50 % |
| Perlite | 10 % | 15 % |
| Vermiculite | 0 % | 10 % |
| Fibres synthétiques | 0,5 % | 0,5 % |
| Farine de bois | 4 % | 4 % |
| Spath fluor | 3,5 % | 2,5 % |
| Phosphate alcalin ou alcalinoterreux | 20 % | 17,5 % |

| | Exemple V |
|---|---|
| ciment alumineux : | 16 % |
| ciment Portland : | 29 % |

4

| | |
|---|---|
| chaux vive : | 14 % |
| perlite : | 18 % |
| spath fluor : | 2 % |
| farine de bois : | 3 % |
| phosphate alcalin ou alcalino-terreux : | 18 % |

Exemple VI

| | |
|---|---|
| ciment alumineux : | 0 % |
| ciment Portland : | 58 % |
| chaux vive/ou éteinte : | 0 % |
| perlite : | 5 % |
| vermiculite : | 10 % |
| fibres synthétiques : | 0,5 % |
| spath fluor : | 3,5 % |
| ralentisseur ou accélérateur de prise du ciment : | 1 % |
| farine de bois : | 2 % |
| carbonate de calcium : | 0 % |
| phosphate alcalin ou alcalino-terreux : | 20 % |

Les revêtements obtenus à partir des compositions selon les exemples II à IV sont un peu moins durs que celui obtenu à partir de l'exemple I. Ils possèdent une bonne adhérence sur le plâtre, le ciment et le fer. Après exposition au feu, ils adhèrent un peu moins bien que les revêtements à base de ciment magnésien, mais ils résistent mieux au feu que ces derniers, grâce à l'excellent frittage qui est obtenu entre les particules inorganiques.

De plus, les revêtements selon les exemples II à VI peuvent être exposés aux intempéries.

Par ailleurs, ce sont les revêtements selon les exemples II à VI qui retardent le plus la montée en température, en cas d'incendie, car ils retiennent lors de leur prise une quantité maximale d'eau de cristallisation.

Dans le cas des ciments ordinaires du type Portland, ciments laitiers, ciments fondus d'aluminate monocalcique, ciments artificiels de silicate tri et borocalcique et ciments réfractaires à haute teneur en alumine, on constate que l'ajout du composé donnant de l'eau de cristallisation accélère sensiblement la prise de ces ciments, ce qui constitue un inconvénient pour l'application du revêtement.

La demanderesse a découvert que cet inconvénient pouvait être supprimé en ajoutant à la composition du revêtement un retardateur de prise constitué par du borax (tétraborate de sodium) ou de l'acide borique.

Dans le cas des ciments magnésiens, le temps de prise dépend de la perte au feu de la magnésie utilisée dans de tels ciments. Le temps de prise est optimal lorsque la magnésie a une perte au feu d'environ 12-13 %. Dans le cas contraire, la prise est souvent trop lente.

La demanderesse a découvert qu'on pouvait remédier à cet inconvénient, en ajoutant à la composition d'un ciment magnésien renfermant n'importe quelle magnésie, de la chaux vive et/ou éteinte en tant qu'accélérateur de prise.

## Revendications

1. Revêtement pour protéger des constructions contre le feu et la chaleur, comprenant des particules inorganiques réfractaires enrobées dans un liant hydraulique, caractérisé en ce qu'il comprend du ciment magnésien ou du ciment alumineux et/ou Portland et un phosphate alcalin ou alcalino-terreux, capable de conférer au revêtement lors de la prise du ciment, en présence d'eau un nombre de molécules d'eau de cristallisation supérieur à celui obtenu avec le ciment seul, la proportion pondérale de ce phosphate alcalin ou alcalino-terreux étant comprise entre 1,5 et 20 %.

2. Revêtement selon la revendication 1, caractérisé en ce que sa composition pondérale est la suivante :

| | | | |
|---|---|---|---|
| ciment magnésien (chlorure et/ou sulfate de magnésie additionné de magnésie) : | 26 | à 60 | % |
| perlite et/ou vermiculite en grains de diamètre compris entre 0 et 5 mm : | 15 | à 38 | % |
| borate de calcium et/ou carbonate de calcium : | 3 | à 0 | % |
| fibres synthétiques : | 28 | à 0 | % |
| farine de bois : | 4 | à 0 | % |
| spath fluor : | 4 | à 0,5 | % |
| phosphate alcalin ou alcalino-terreux capable de conférer au revêtement lors de la prise du ciment en présence d'eau un nombre de molécules d'eau de cristallisation supérieur à celui obtenu avec le ciment seul : | 1,5 | à 20 | % |

**0 029 833**

## Claims

1. Coating for protecting structures against fire and heat, comprising inorganic refractory particles coated with a hydraulic binder, characterized in that it comprises magnesia cement or aluminous cement and/or Portland cement and an alkali-metal or alkaline-earth phosphate which is capable, at the time of setting of the cement and in the presence of water, of providing the coating with a number of molecules of water of crystallization larger than that obtained with the cement alone, the proportion by weight of this alkali-metal or alkaline-earth phosphate being comprised between 1.5 and 20 %.

2. Coating in accordance with claim 1, characterized in that its weight composition is as follows :

| | |
|---|---|
| magnesia cement (magnesia chloride and/or sulfate with added magnesia) : | 26 to 60 % |
| perlite and/or vermiculite in the form of grains having a diameter comprised between 0 and 5 mm : | 15 to 38 % |
| calcium borate and/or calcium carbonate : | 3 to 0 % |
| synthetic fibres : | 28 to 0 % |
| wood flour : | 4 to 0 % |
| fluorspar : | 4 to 0.5 % |
| alkali-metal or alkaline-earth phosphate which is capable, at the time of setting of the cement and in the presence of water, of providing the coating with a number of molecules of water of crystallization larger than that obtained with the cement alone : | 1.5 to 20 % |

3. Coating in accordance with claim 1, characterized in that its weight composition is as follows :

| | |
|---|---|
| aluminous cement and/or Portland cement : | 30 to 62 % |
| inorganic particles (for example perlite or vermiculite) : | 25 to 10 % |
| carbonaceous materials : | 0 to 2 % |
| cement-setting retardants or accelerators : | 0 to 2 % |
| fluxes : | 0 to 3.5 % |
| mineral and/or organic fibres : | 40 to 0.5 % |
| alkali-metal or alkaline-earth phosphate which is capable, at the time of setting of the cement and in the presence of water, of providing the coating with a number of molecules of water of crystallization larger than that obtained with the cement alone : | 5 to 20 % |

## Ansprüche

1. Verkleidung zum Schutz von Bauten gegen Feuer und Wärme, mit von einem hydraulischen Bindemittel umhüllten anorganischen feuerfesten Teilchen, dadurch gekennzeichnet, daß sie Magnesia- oder Aluminatzement und/oder Portlandzement und ein Alkali- oder Erdalkaliphosphat enthält, das geeignet ist, der Verkleidung beim Abbinden des Zements in Gegenwart von Wasser eine Anzahl von Kristallwassermolekülen zu vermitteln, welche höher ist als die mit Zement allein erhaltene, wobei der Gewichtsanteil dieses Alkali- oder Erdalkaliphosphats zwischen 1,5 und 20 % liegt.

2. Verkleidung nach Anspruch 1, gekennzeichnet durch folgende gewichtsmäßige Zusammensetzung :

| | |
|---|---|
| Magnesiazement (mit Magnesia versetztes Magnesiumchlorid und/oder -sulfat) : | 26 bis 60 % |
| Perlit und/oder Vermiculit in Form von Körnern mit einem Durchmesser zwischen 0 und 5 mm : | 15 bis 38 % |

6

**0 029 833**

Calciumborat und/oder Calciumcarbonat : 3 bis 0 %
synthetische Fasern : 28 bis 0 %
Holzmehl : 4 bis 0 %
Flußspat : 4 bis 0,5 %
Alkali- oder Erdalkaliphosphat, das geeignet ist, der Verkleidung beim Abbinden des Zements in Gegenwart von Wasser eine Anzahl von Kristallwassermolekülen zu vermitteln, welche höher ist als die mit Zement allein erhaltene 1,5 bis 20 %

3. Verkleidung nach Anspruch 1, gekennzeichnet durch folgende gewichtsmäßige Zusammensetzung :
Aluminatzement und/oder Portlandzement : 30 bis 62 %
anorganische Teilchen (z. B. Perlit oder Vermiculit) : 25 bis 10 %
kohlenstoffhaltiger Stoff : 0 bis 2 %
das Abbinden des Zements verzögernder oder beschleunigender Stoff : 0 bis 2 %
Flußmittel : 0 bis 3,5 %
mineralische und/oder organische Fasern : 40 bis 0,5 %
Alkali- oder Erdalkaliphosphat, das geeignet ist, der Verkleidung beim Abbinden des Zements in Gegenwart von Wasser eine Anzahl von Kristallwassermolekülen zu vermitteln, welche höher ist als die mit Zement allein erhaltene 5 bis 20 %

7